# EUROPÄISCHE PATENTSCHRIFT

(11) **EP 3 541 560 B1**
(45) Veröffentlichungstag und Bekanntmachung des Hinweises auf die Patenterteilung: **07.04.2021**
(21) Anmeldenummer: 17800824.9
(22) Anmeldetag: 15.11.2017
(51) Int. Cl.: B23K 20/00, B23K 20/02, B23K 26/26, B23K 26/28

(54) **PRESSSCHWEISSENVERFAHREN UND -VORRICHTUNG MIT UNTERSTÜTZUNG VON LASER**
PRESSURE WELDING METHOD AND APPARATUS WITH HELP OF LASER
METHODE ET DISPOSITIF DE SOUDAGE PAR PRESSION ASSISTE PAR LASER

(30) Priorität: 16.11.2016 DE 102016122060
(43) Veröffentlichungstag der Anmeldung: 25.09.2019
(73) Patentinhaber: CSM Maschinen GmbH, 86899 Landsberg am Lech (DE)
(72) Erfinder: SCHUSTER, Helmut, 86920 Denklingen (DE); MERK, Robert, 86862 Lamerdingen (DE); PETZUCH, Andreas, 86179 Augsburg (DE); HÖRMANN, Florian, 85250 Altomünster (DE)
(74) Vertreter: Lang, Christian
(86) Internationale Anmeldenummer: PCT/EP2017/079336
(87) Internationale Veröffentlichungsnummer: WO 2018/091536

(56) Entgegenhaltungen:
- DE-A1-102008 014 934
- DE-A1-102010 007 573

## Beschreibung

Die vorliegende Erfindung betrifft ein Verfahren zum Verbinden eines ersten metallischen Rohteils mit einer ersten Verbindungsfläche und eines zweiten metallischen Rohteils mit einer zweiten Verbindungsfläche, sowie eine Vorrichtung zur Durchführung des Verfahrens.

Aus der DE 10 2008 014 934 A1 ist ein Verfahren zum Verbinden eines ersten metallischen Rohteils mit einer ersten Verbindungsfläche und eines zweiten metallischen Rohteils mit einer zweiten Verbindungsfläche bekannt, in dem die beiden Verbindungsflächen auf eine Temperatur zwischen der Rekristallisierungstemperatur und der Schmelztemperatur der beiden Rohteile mittels eines Magnetfeldes erwärmt und dann aneinander angedrückt werden, bis sich die Rohteile an den Verbindungsflächen auf eine Temperatur unterhalb der Rekristallisationstemperatur abgekühlt haben.

Aus der Patentanmeldungsveröffentlichung DE 10 2008 014 934 A1 ist ein Verfahren und eine Vorrichtung mit den Merkmalen des Oberbegriffes von Anspruch 1 bzw. Anspruch 5 bekannt, bei welchem die Komponenten einer Achsbrücke durch Induktion erhitzt und sodann gegeneinander gepresst werden, wobei mittlere und seitliche Halteeinrichtungen dafür sorgen, dass die Komponenten passgenau zusammengeschweißt werden.

Aus der Patentanmeldungsveröffentlichung DE 10 2010 007 573 A1 ist ein Verfahren zum Zusammenschweißen zweier Bleche mittels eines oder zweier Laser bekannt, wobei der Laserstrahl parallel zu den zusammen zu schweißenden Verbindungsflächen der Bleche orientiert ist.

Es ist Aufgabe der Erfindung, das bekannte Verfahren zu verbessern.

Ein erster Aspekt der Erfindung betrifft ein Verfahren mit den Merkmalen des Anspruches 1. Weitere Ausgestaltungen des erfindungsgemäßen Verfahrens sind Gegenstand der abhängigen Ansprüche. Das erfindungsgemäße Verfahren zum Verbinden eines ersten metallischen Rohteils mit einem eine erste Verbindungsfläche aufweisenden ersten Verbindungsabschnitt und eines zweiten metallischen Rohteils mit einem eine zweite Verbindungsfläche aufweisenden zweiten Verbindungsabschnitt umfasst die Schritte:
- Erwärmen der ersten Verbindungsfläche auf eine Temperatur zwischen der Rekristallisierungstemperatur und der Schmelztemperatur des ersten Rohteils durch Laserbestrahlen des ersten Verbindungsabschnitts des ersten Rohteils,
- Erwärmen der zweiten Verbindungsfläche auf eine Temperatur zwischen der Rekristallisierungstemperatur und der Schmelztemperatur des zweiten Rohteils durch Laserbestrahlen des zweiten Verbindungsabschnitts, und
- Anpressen der ersten Verbindungsfläche des ersten Rohteils an die zweite Verbindungsfläche des zweiten Rohteils, bis sich die Rohteile an den Verbindungsflächen auf eine Temperatur unterhalb der Rekristallisationstemperatur abgekühlt haben.

Dem angegebenen Verfahren liegt die Überlegung zugrunde, dass in dem eingangs genannten Verfahren das Material an den Verbindungsflächen beider Rohteile nicht beliebig unabhängig voneinander gewählt werden kann, weil sich die Magnetfelder bei der Erwärmung der beiden Rohteile an den Verbindungsflächen gegenseitig beeinflussen. Daher muss beim Pressschweißen mittels Magnetfelder ein Material für beide Rohteile gewählt werden, das im Wesentlichen die gleiche Rekristallisierungs- und Schmelztemperatur hat. Die gleiche Problematik tritt in einem noch viel einschränkenderem Ausmaß beim Pressschweißen mittels Reibwärme auf, weil sich hier die beiden Rohteile an den Verbindungsflächen gegenseitig erhitzen, so dass die Temperatur an beiden Rohteilen nicht beliebig voneinander einstellbar ist. Ein weiterer Nachteil beider Verfahren ist, dass die Verbindungsflächen geometrisch eingeschränkt sind. Sie müssen zumindest beim Schweißen mittels Reibwärme in sich geschlossen und weitestgehend plan sein und dürfen vor allem nicht in einer Ausnehmung der Rohteile angeordnet werden, weil sonst die Erwärmung oder Erhitzung der Rohteile an den Verbindungsflächen gar nicht möglich ist.

Hier greift das angegebene Verfahren mit der Überlegung an, statt der herkömmlichen Methoden beim Pressschweißen zum Erhitzen einen Laser zu verwenden. Dieser kann die Rohteile an den Verbindungsflächen selbst dann zuverlässig erhitzen, wenn sie beliebige Konturen besitzen, weil der Laser nicht nur wie ein Stift auch zurückgesetzte Flächen und Teilflächen unterbrochener Konturen erreichen kann. Der Energieeintrag an den Verbindungsflächen der beiden Rohteile ist mit einem Laser auch völlig unabhängig voneinander einstellbar. So wären auf diese Weise auch metallische Rohteile mit völlig unterschiedlichen Rekristallisationstemperaturen, wie beispielsweise Aluminium mit einer Rekristallisationstemperatur von 150 °C und Nickel mit einer Rekristallisationstemperatur von 600 °C, miteinander verbindbar. Dies ist mit keinem herkömmlichen Pressschweißverfahren möglich.

Die Verbindungsabschnitte können neben den Verbindungsflächen weitere Flächen des Rohteils umfassen, an denen die Verbindungsabschnitte durch Bestrahlen mit dem Laser erhitzt werden können. Voraussetzung ist jedoch, dass die bestrahlten Flächen so nah an den Verbindungsflächen liegen, dass eine thermische Energieübertragung an die Verbindungsflächen sichergestellt ist. Damit können die Verbindungsflächen direkt durch Bestrahlung oder indirekt durch Bestrahlen einer benachbarten Fläche erhitzt werden.

Grundsätzlich könnten die Verbindungsabschnitte der beiden Rohteile mit dem gleichen Laser erhitzt werden. Um allerdings Energieverluste durch Abkühlung der beiden Rohteile an ihren Verbindungsflächen so gering wie möglich zu halten, sollte jeder Verbindungsabschnitt mit einem eigenen Laser bestrahlt werden. Zwar schlägt sich der zweite Laser zunächst in höheren Anschaffungskosten nieder, über die Zeit rechnet sich jedoch der Parallelbetrieb zweier Laser in den Energiekosten aufgrund der niedrigeren Energieverluste aufgrund von Abkühlung.

Gemäß der Erfindung sollten die erste Verbindungsfläche und die zweite Verbindungsfläche beim Bestrahlen entsprechend mit dem ersten Laser und dem zweiten Laser derart angeordnet sein, dass die Flächennormalen der Verbindungsflächen in entgegengesetzte Richtungen zeigen. Auf diese Weise brauchen die beiden Rohteile nach dem Erwärmen auf die Temperatur oberhalb der Rekristallisationstemperatur nicht erst drehend aufeinander ausgerichtet werden, was nicht nur entsprechende Bewegungsakktuatoren einspart auch die für diese Bewegung notwendige Abkühlzeit wird gering gehalten, wodurch die Energiekosten weiter gesenkt werden können.

Gemäß der Erfindung sollen ferner die Laser die entsprechenden Verbindungsflächen winklig zu deren Flächennormalen bestrahlen. Auf diese Weise können die beiden Verbindungsflächen beim Erwärmen oder Erhitzen auf einer gemeinsamen Achse ausgerichtet werden, so dass sie nach dem Erwärmen oder Erhitzen zum Zusammenpressen nur auf dieser Achse aufeinander zu bewegt werden müssen.

Auf diese Weise ist der Bewegungsweg zum Verpressen der beiden Rohteile und damit der potentielle Energieverlust durch Abkühlung am geringsten.

In einer anderen Weiterbildung des angegebenen Verfahrens sollte der Laser beim Erhitzen des Verbindungsabschnitts am ersten und/oder zweiten Rohteil eine Kurve über den entsprechenden Verbindungsabschnitt fahren, die die entsprechende Verbindungsflächen zu einem vorbestimmten Überdeckungsgrad ausfüllt. Auf diese Weise wird der entsprechende Verbindungsabschnitt wie mit einem Stift ausgemalt und damit vom Laser auf die zur Durchführung des Pressschweißens notwendigen Betriebstemperatur zuverlässig erhitzt.

Hierbei sollte der Laser die Kurve nicht nur einmal, sondern periodisch mit einer Überdeckungsfrequenz abfahren. Auf diese Weise wird vermieden, dass der Laser auf dem entsprechenden Verbindungsabschnitt lokal zu lange stehen bleibt und das entsprechende Rohteil an dieser Stelle auf eine Temperatur oberhalb der Schmelztemperatur zu hoch erhitzt, was das Rohteil beschädigen könnte.

Die zuvor genannte Überdeckungsfrequenz sollte derart gewählt sein, dass an jedem Punkt der Kurve auf dem entsprechenden Verbindungsabschnitt eine Energiezufuhr während einer Bestrahlung durch den Laser größer ist, als eine Energieabfuhr während einer Abkühlung bei der der Laser den Rest der Kurve abfährt. Auf diese Weise ist sichergestellt, dass die Gesamtenergiezufuhr auch groß genug ist, der entsprechende Verbindungsabschnitt auch wirklich auf eine Temperatur oberhalb der Rekristallisierungstemperatur zu erhitzen.

Die zuvor genannten Verfahrensmerkmale betrafen zwar nur einen Verbindungsabschnitt eines der beiden Rohteile, die Verfahrensmerkmale sind jedoch auf die Verbindungsabschnitte beider Rohteile gleichermaßen anwendbar, denn die zu den Verbindungsabschnitten zugehörigen Verbindungsflächen müssen gleichermaßen auf eine Temperatur oberhalb der Rekristallisierungstemperatur erwärmt werden, um das Pressschweißen zu ermöglichen. Unterscheiden sich die Rohteile in ihrem Material, so kann es notwendig sein, die Parameter der Verfahrensschritte, wie die Überdeckungsfrequenz und/oder eine Intensität des entsprechenden Lasers und/oder andere Parameter entsprechend verschieden voneinander zu wählen.

Ein weiterer Aspekt der Erfindung betrifft eine Vorrichtung mit den Merkmalen des Anspruches 5, die ausgebildet ist, das zuvor beschriebene Verfahren durchzuführen. Die erfindungsgemäße Vorrichtung umfasst ein erstes Spannmittel zum Einspannen eines ersten Rohteils, ein zweites Spannmittel zum Einspannen eines zweiten Rohteils, eine Laserabgabevorrichtung zum Erhitzen einer ersten Verbindungsfläche des ersten Rohteils und einer zweiten Verbindungsfläche des zweiten Rohteils mittels Laser, und eine Pressvorrichtung zum Verpressen der an den Verbindungsflächen erhitzten Rohteile an den Verbindungsflächen.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Ansicht einer Fertigungsstraße,
Fig. 2 eine perspektivische Ansicht einer als Laserpressschweißmaschine ausgeführten Werkzeugmaschine für die Fertigungsstraße der Fig. 1,
Fig. 3 einen vergrößerten Ausschnitt der Laserpressschweißmaschine der Fig. 2,
Fig. 4a einen schematischen Verfahrensablauf gemäß einem ersten Ausführungsbeispiel für die Laserpressschweißmaschine der Fig. 2 und 3,
Fig. 4b eine schematische Zeichnung für einen Weg eines Lasers auf einem Rohteil in der Laserpressschweißmaschine der Fig. 2 und 3,
Fig. 4c ein Diagramm, zum Erläutern des Energieeintrages über die Zeit in dem Rohteil der Fig. 4b,
Fig. 5a einen schematischen Verfahrensablauf für die Laserpressschweißmaschine der Fig. 2 und 3,
Fig. 5b einen schematischen Verfahrensablauf für die Laserpressschweißmaschine der Fig. 2 und 3,
Fig. 6a einen schematischen für die Laserpressschweißmaschine der Fig. 2 und 3,
Fig. 6b einen schematischen Verfahrensablauf für die Laserpressschweißmaschine der Fig. 2 und 3,
Fig. 7a eine Stirnansicht eines ersten Rohteils für ein Werkstück,
Fig. 7b eine abgeschnittene Seitenansicht eines mit der Laserpressschweißmaschine der Fig. 2 und 3 herstellbaren Werkstücks mit dem ersten Rohteils der Fig. 7a,
Fig. 7c eine Stirnansicht eines zweiten Rohteils für das Werkstück der Fig. 7b, und Fig. 8 ein alternatives mit der Laserpressschweißmaschine der Fig. 2 und 3 herstellbaren Werkstücks.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

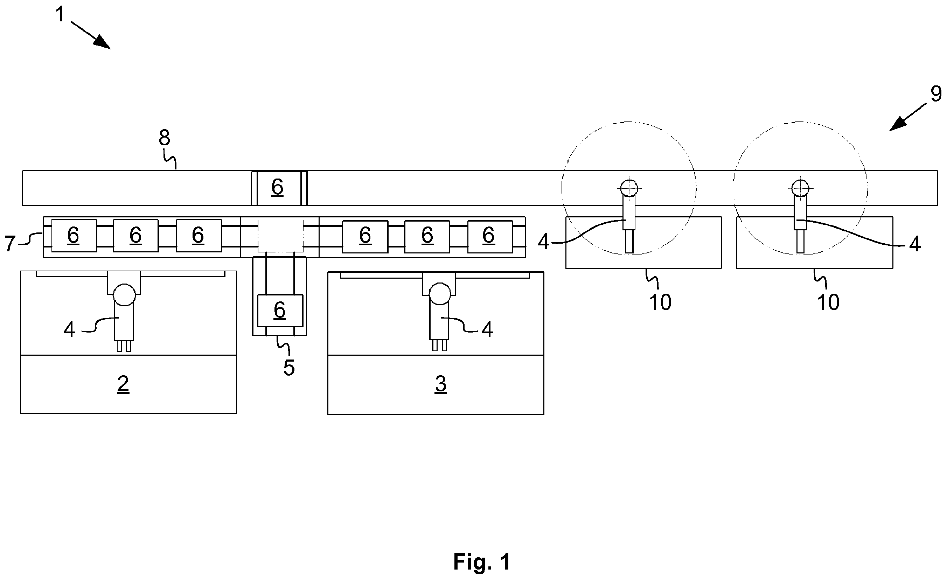

Es wird auf Fig. 1 Bezug genommen, die eine schematische Ansicht einer Fertigungsstraße 1 zeigen. In der Fertigungsstraße 1 soll aus Rohteilen mit Werkzeugen nicht weiter spezifizierte Fertigprodukte hergestellt werden.

Die Fertigungsstaße 1 umfasst ein Rohteillager 2, in dem die Rohteile gelagert sind, und ein Werkzeuglager 3, in dem die Werkzeuge gelagert sind. Je ein Greifrobotor 4 im Rohteillager 2 und im Werkzeuglager 3 kann entsprechend ein Rohteil oder ein Werkzeug greifen und damit auf einem Rüstplatz 5 eine Platte 6 bestücken. Eine ausreichende Anzahl an Platten 6 ist in einem Plattenspeicher 7 vorgehalten.

Die mit dem Rohteilen oder den Werkzeugen bestückten Platten 6 können dann über ein Förderband 8 zu einer Reihe 9 mit Werkzeugmaschinen 10 gefahren werden. Die Werkzeugmaschinen 10 führen gemeinsam einen Fertigungsprozess aus, mit dem die zuvor erwähnte Aufgabe, aus den Rohteilen mit den Werkzeugen nicht weiter spezifizierte Werkstücke herzustellen, erfüllt wird.

Jede Werkzeugmaschine 10 in der Reihe 9 führt einen oder mehrere Zwischenschritte des Fertigungsprozesses aus. Greifroboter 4 greifen hierzu die Rohteile und/oder die Werkzeuge von den Platten 6 und bestücken damit die Werkzeugmaschine 10, die den entsprechenden Zwischenschritt ausführen soll. Nach Abschluss des Zwischenschrittes oder sobald ein Werkzeug nicht mehr gebraucht wird, legen die Greifroboter 4 entweder das Zwischen- oder Fertigprodukt oder das nicht mehr gebrauchte Werkzeug zurück auf die entsprechende Platte 6, die dann entweder zur nächsten Werkzeugmaschine 10 und damit zum nächsten Zwischenschritt oder zurück zu den Lagern 2, 3 fährt. Um nachstehend die Begriffe Rohteil und Werkstück sauber zu trennen, soll unter einem Rohteil das zu bearbeitende Material verstanden werden, das einer Werkzeugmaschine 10 zugeführt wird, unabhängig davon ob es sich um ein Rohteil aus dem Rohteillager 2 oder um ein Zwischenprodukt aus einem vorangegangen Zwischenschritt in einer anderen Werkzeugmaschine handelt. Unter einem Werkstück soll das von einer Werkzeugmaschine 10 bearbeitete Rohteil verstanden werden. Ein eine Werkzeugmaschine 10 verlassendes Werkstück kann daher das Rohteil für eine andere Werkzeugmaschine 10 sein.

Eine nicht weiter dargestellte Leitstelle kann den Materialfluss mittels den Greifrobotern 4 und den Platten 6 koordinieren.

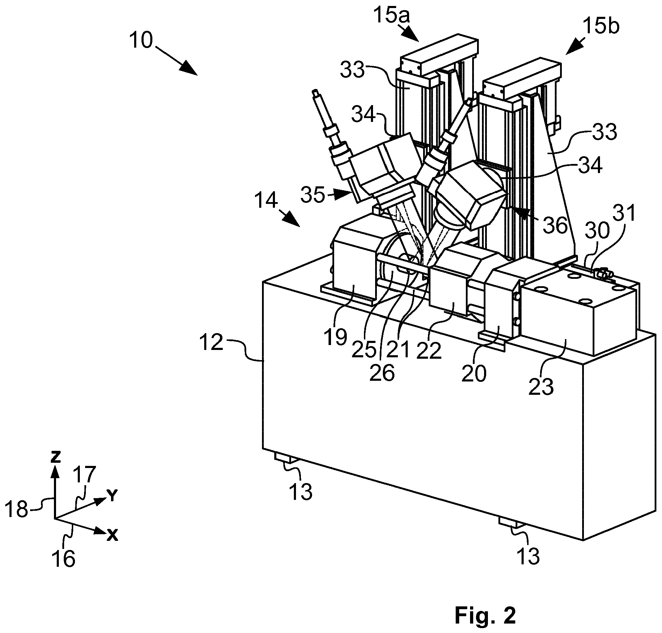

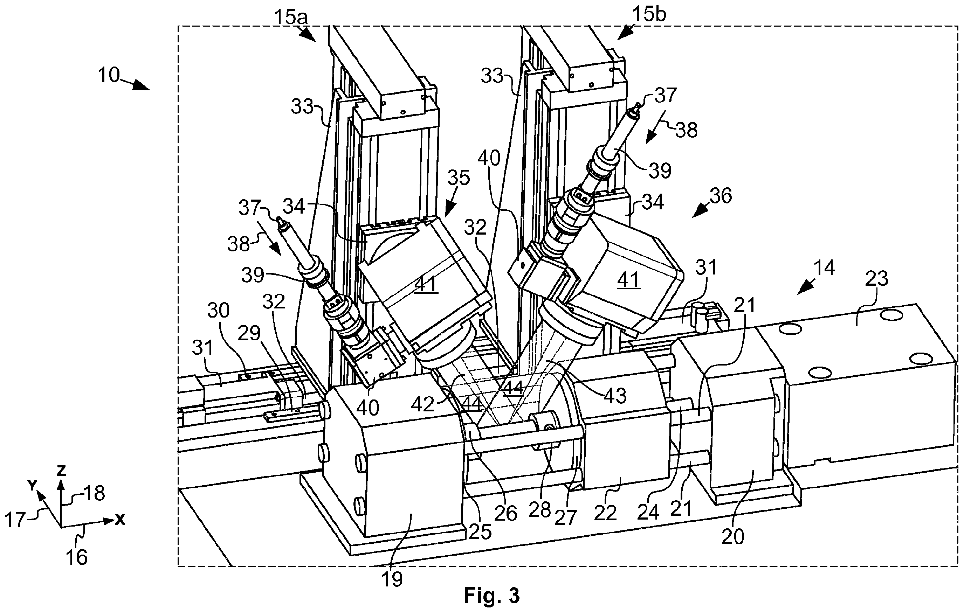

Es wird auf Fig. 2 und 3 Bezug genommen, die perspektivische Ansichten einer als Laserpressschweißmaschine ausgeführten Werkzeugmaschine 10 für die Fertigungsstraße der Fig. 1 zeigt.

Die Laserpressschweißmaschine 10 umfasst ein Maschinenbett 12, das auf Füßen 13 getragen ist. Von den Füßen 13 sind in der Perspektive der Fig. 2 nicht alle zu sehen. Auf dem Maschinenbett 12 sind ein motorisch betriebener Schraubstock 14 sowie ein erster Träger 15 und ein zweiter Träger 15b gehalten. Für die weiteren Erläuterungen soll definiert werden, dass sich die Laserpressschweißmaschine 10 in einem Raum mit einer x-Ausdehnung 16, einer y-Ausdehnung 17 und einer z-Ausdehnung 18 befindet.

Der Schraubstock 14 umfasst ein erstes ortsfestes Ankerelement 19 und ein in x-Richtung 16 davon beabstandet angeordnetes zweites ortsfestes Ankerelement 20. zwischen den beiden ortsfesten Ankerelementen 19, 20 sind vier Führungsstangen 21 gehalten, von denen in Fig. 2 und 3 der Übersichtlichkeit halber nicht alle mit einem eigenen Bezugszeichen versehen sind. Zwischen den beiden ortsfesten Ankerelementen 19, 20 ist gleitend auf den Führungsstangen ein Schlitten 22 gelagert, der angetrieben von einem Motor 23 über eine durch ein nicht zusehendes Innengewinde im zweiten ortsfesten Ankerelement 20 geführte Spindelstange 24 zwischen den beiden ortsfesten Ankerelementen 19, 20 in der x-Richtung 16 hin- und herbewegt werden kann. Mit dem Spannstock 14 können die oben genannten Rohteile in der x-Richtung 16 gegeneinander verpresst werden.

Hierzu ist am ersten Ankerelement 19 zum Schlitten 22 hin gerichtet eine erste Trageplatte 25 mit einem ersten Spannfutter 26 gehalten. In gleicher Weise ist am Schlitten 22 zum ersten Ankerelement 19 hin gerichtet eine zweite Trageplatte 27 mit einem zweiten Spannfutter 28 gehalten. In jedem der Spannfutter 26, 28 kann ein Rohteil in an sich bekannter Weise verspannt werden, um beide dann angetrieben durch den Motor 23 in x-Richtung 16 gegeneinander zu verspannen.

Die beiden Träger 15, 16 sind in x-Richtung 16 verfahrbar auf einer Führungsschiene 29 und einer zweiten Führungsschiene 30 gehalten, die in y-Richtung 17 gesehen hinter der ersten Führungsschiene 29 angeordnet ist. Jeder Träger 15, 16 ist über einen eigenen Antriebsmotor 31 und eine eigene Spindelstange 32 auf den Führungsschienen 29, 30 in der x-Richtung 16 hin- und herbewegbar.

Jeder Träger 15, 16 besitzt ein Schlittensystem 33, an dem in z-Richtung 18 verfahrbar je ein Schwenkarm 34 gehalten ist. Jeder der Schwenkarme 34 wird über ein in den Fig. 2 und 3 nicht weiter zu sehendes Antriebssystem in der z-Richtung 18 bewegt. Auf die genaue Funktionsweise des Schlittensystems 33 kommt es zum Verständnis der weiteren Ausführungen nicht an, weshalb hierauf nicht näher eingegangen werden soll.

Am Schwenkarm 34 des ersten Trägers 15a ist eine erste Scanneroptik 35 einer ersten Laseranlage gehalten, die in den Fig. 2 und 3 nicht vollständig ausgeführt ist. Entsprechend ist am Schwenkarm 34 des zweiten Trägers 15b eine zweite Scanneroptik 36 einer zweiten Laseranlage gehalten, die ebenfalls in den Fig. 2 und 3 nicht vollständig ausgeführt ist. Die Schwenkarme 34 halten ihre jeweilige Scanneroptik 35, 36 schwenkbar um die y-Achse 17. Zum Schwenken werden die Schwenkarme 34 je von einem in Fig. 2 und 3 nicht weiter zu sehendem Antriebssystem angetrieben.

Nachstehend werden Details der Scanneroptiken 35, 36 beschrieben. Aus Übersichtlichkeitsgründen sind hierbei nur die Scanneroptiken 35, 36 der Fig. 3 mit Bezugszeichen versehen.

Jede Scanneroptik 35, 36 weist ein in den Fig. 2 und 3 abgeschnitten dargestelltes Laserlichtkabel 37 auf, über das die entsprechende Scanneroptik 35, 36 mit Laserlicht 38 versorgt wird. Das Laserlicht 38 wird in einem Kollimator 39 in an sich bekannter Weise parallelisiert und über einen Ablenkspiegel 40 in eine Strahlführungseinrichtung 41 geleitet. Die Strahlführungseinrichtung 41 der ersten Scanneroptik 35 gibt dann einen aus dem Laserlicht 38 erzeugten ersten Laser 42 aus, während die Strahlführungseinrichtung 41 der zweiten Scanneroptik 36 einen aus dem Laserlicht 38 erzeugten zweiten Laser 43 ausgibt. Über die Strahlführungseinrichtung 41 der jeweiligen Scanneroptik 35, 36 ist der entsprechende Laser 42, 43 mittels nicht weiter gezeigter einstellbarer Spiegel und Objektiven innerhalb eines Arbeitsbereiches 44 an einen beliebigen Punkt fokusierbar. Die genaue Funktionsweise dieser Fokusierung ist an sich bekannt und braucht nicht weiter erläutert zu werden.

Somit kann die erste Scanneroptik 35 geführt über das Schlittensystem 33 und den Schwenkarm 34 des ersten Trägers 15a grob das zweite Spannfutter 28 ausgerichtet werden. Ein in dem zweiten Spannfutter 28 eingespanntes Rohteil kann dann an einer zum ersten Spannfutter 26 weisenden Stelle mittels des ersten Lasers 42 aus der ersten Scanneroptik 35 auf eine Temperatur oberhalb der Rekristallisierungstemperatur des Rohteils im zweiten Spannfutter 28 erhitzt werden. Entsprechend kann die zweite Scanneroptik 36 geführt über das Schlittensystem 33 und den Schwenkarm 34 des zweiten Trägers 15b grob auf das erste Spannfutter 26 ausgerichtet werden. Ein in dem ersten Spannfutter 26 eingespanntes Rohteil kann dann an einer zum zweiten Spannfutter 28 weisenden Stelle mittels des zweiten Lasers 43 aus der zweiten Scanneroptik 36 auf eine Temperatur oberhalb der Rekristallisierungstemperatur des Rohteils im ersten Spannfutter 26 erhitzt werden. Abschließend können die beiden Rohteile an der erhitzten Stelle über den Schraubstock 14 miteinander pressverschweißt werden. Die Verwendung von zwei Scanneroptiken 35, 36 ist in Fig. 2 und 3 eine technisch besonders günstige Ausführung. Aus Kostengründen wäre es jedoch grundsätzlich auch denkbar, einzig die erste Scanneroptik 35 einzig auf dem ersten Träger 15 getragen zu verwenden.

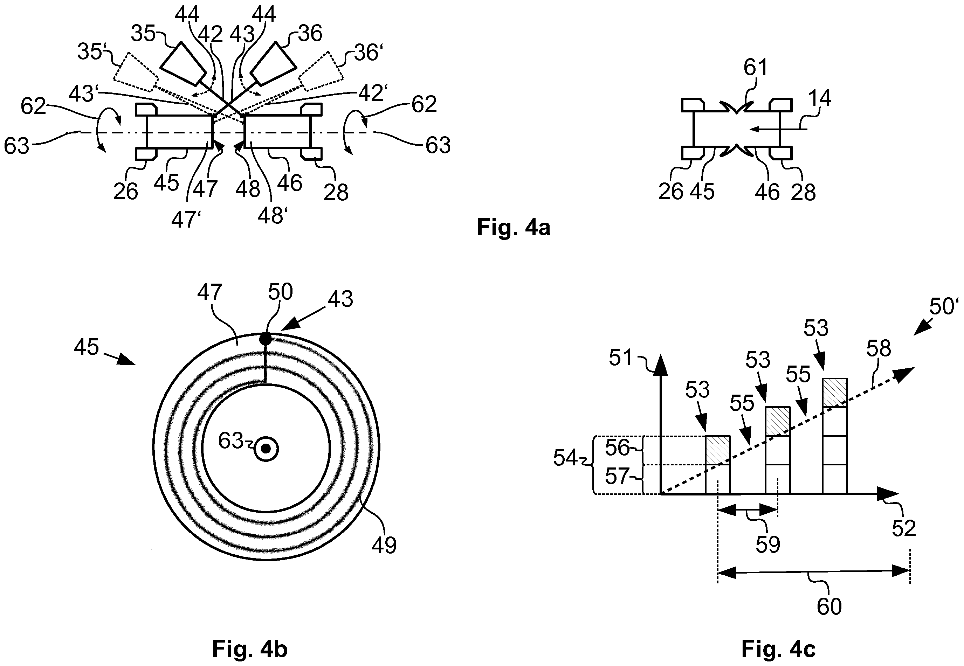

Auf den zuvor grundsätzlich erläuterten Betrieb der Laserpresschschweißmaschine 10 soll nachstehend anhand der Fig. 4a näher eingegangen werden. In Fig. 4a ist ganz konkret ein erstes Rohteil 45 gezeigt, das in das erste Spannfutter 26 eingespannt ist, sowie ein zweites Rohteil 46, das in das zweite Spannfutter 28 eingespannt ist. In dem in Fig. 4a gezeigten Verfahren zum Pressverschweißen der beiden Rohteile 45, 46 arbeiten die beiden Laser 42, 43 über Kreuz. Das heißt, dass der erste Laser 42 das zweite Rohteil 46 erhitzt und der zweite Laser 43 das erste Rohteil 45. Hierfür weisen erste Rohteil 45 und das zweite Rohteil 46 entsprechen einen ersten Verbindungsabschnitt 47' mit einer ersten Verbindungsfläche 47 beziehungsweise einen zweiten Verbindungsabschnitt 48' mit einer zweiten Verbindungsfläche 48 auf. In Fig. 4a werden die beiden Rohteile 45, 46 unmittelbar an den Verbindungsflächen 47, 48 erhitzt und durch Verpressen zusammengeführt.

Zum Erhitzen der Verbindungsflächen 47, 48 werden zunächst die erste Scanneroptik 35 und die zweite Scanneroptik 36 entsprechend auf das zweite Rohteil 46 und das erste Rohteil 45 ausgerichtet. Ziel der Ausrichtung ist es, dass der Arbeitsbereich 44 jeder Scanneroptik 35, 36 überschneidungsfrei mit dem jeweils anderen, nicht zu erhitzenden Rohteil 46, 45 platziert wird, so dass vermieden wird, dass sich die Rohteile 45, 46 gegenüber den Lasern 42, 43 gegenseitig abschatten. In Fig. 4a ist zur Verdeutlichung mit gestrichelten Linien und Apostrophen an den Bezugszeichen eine Lage der Scanneroptiken 35, 36 angedeutet, in dem sich die Rohteile 45, 46 in einem Teilbereich des Arbeitsbereiches 44 der Scanneroptiken 35, 36 gegenseitig abschatten.

Nach der Positionierung der Scanneroptiken 35, 36 beginnt der Bestrahlungsvorgang. Hierbei bestrahlen die auf Rohteile 45, 46 ausgerichteten Scanneroptiken 35, 36 die deren Verbindungsflächen 47, 48 kreuzweise mit den entsprechenden Lasern 42, 43 und erhitzen so die Verbindungsfläche 47, 48 des jeweiligen Rohteils 45, 46 auf eine Temperatur oberhalb seiner Rekristalisierungstemperatur. Die Rekristallisierungstemperatur ist materialabhängig. Stahl weist beispielsweise eine Rekristallisierungstemperatur auf, die zirka 600°C bis 700°C abhängig von Legierungsbestandteilen und dem vorhandenen Gefügezustand beträgt. Die Erwärmung darf hierbei jedoch nicht über der Schmelztemperatur des jeweiligen Rohteils 45, 46 liegen, weil das Rohteil 45, 46 sonst lokal beschädigt und der Pressverschweißvorgang beeinträchtigt werden könnte.

Um die Rohteile 45, 46 an ihrem Verbindungsflächen 47, 48 flächig zu erhitzen, fahren die Scanneroptiken 35, 36 mit den Lasern 42, 43 die Verbindungsflächen 47, 48 innerhalb des Arbeitsbereiches 44 in Kurven ab. Das heißt, die Laser 42, 43 werden relativ zu den jeweiligen Verbindungsflächen 47, 48 bewegt. Um diese relative Bewegung zu realisieren können alternativ oder zusätzlich auch die Rohteile 45, 46 bewegt werden, was in Fig. 4a durch eine Drehbewegung 62 um eine Rotationsachse 63 der Rohteile 45, 46 angedeutet ist. Zur Bewegung der Rohteile 45, 46 wäre der Schraubstock 14 der Laserpressschweißmaschine 10 der Fig. 2 und 3 jedoch entsprechend anzupassen, um diese Bewegung zu ermöglichen.

In Fig. 4b ist als Beispiel dieser Kurven eine Spiralkurve 49 gezeigt, die auf der Verbindungsfläche 47 des ersten Rohteils 45 vom zweiten Laser 43 abgefahren oder gezeichnet wird. Der auf die erste Verbindungsfläche 47 auftreffende zweite Laser 43 erhitzt die erste Verbindungsfläche 47 punktuell. Mit der Bewegung des zweiten Lasers 43 durch die zweite Scanneroptik 36 wandert diese punktuelle Erhitzung entlang der Spiralkurve 49.

Nachstehend soll die Erhitzung an einem lokalen Punkt 50 auf der ersten Verbindungsfläche 47 betrachtet werden. Für diesen speziellen Punkt 50 kann die Erhitzung durch den zweiten Laser 43 in zwei Phasen unterteilt werden, die anhand von Fig. 4c näher erläutert werden sollen. In Fig. 4c ist ein Diagramm gezeigt, in dem Wärmeenergie 51 am Punkt 50 über die Zeit 52 aufgetragen ist. Um den Zusammenhang mit dem Punkt 50 zu verdeutlichen, ist das Diagramm mit dem Bezugszeichen 50' versehen.

Befindet sich der zweite Laser 43 auf der ersten Verbindungsfläche 47 am Erhitzungspunkt 50, wird die erste Verbindungsfläche 47 in einer Erhitzungsphase 53 am Erhitzungspunkt 50 durch eine Zufuhr 54 (auch Energiezufuhr 54 genannt) von Wärmeenergie 51 aufgeheizt. In Fig. 4c sind drei Erhitzungsphasen 53 angedeutet. Das heißt, der zweite Laser 43 überstreift den Erhitzungspunkt 50 drei Mal und fährt die Spiralkurve 49 drei Mal ab. Die Zufuhr 54 von Wärmeenergie 51 ist in Fig. 4c nur in der ersten Erhitzungsphase 53 mit Bezugszeichen angedeutet. Befindet sich der zweite Laser 43 an anderen Punkten der Spiralkurve 49 außerhalb des Erhitzungspunktes 50 kühlt dieser während Abkühlungsphasen 55 wieder ab, was am Erhitzungspunkt 50 zu einem Verlust 56 an Wärmeenergie 51 (auch Energieabfuhr 56 genannt) führt. Damit sich der Erhitzungspunkt 50 effektiv aufheizt, wenn der zweite Laser 43 die Spiralkurve 49 einmal komplett abfährt, muss eine Energiedifferenz 57 zwischen der Zufuhr 54 an Wärmeenergie 51 und dem Verlust 56 an Wärmeenergie 51 positiv sein. Nur dann kann effektiv über die gesamte erste Verbindungsfläche 47 eine Erwärmung erreicht werden, die in Fig. 4c durch einen dick gestrichelten Pfeil mit dem Bezugszeichen 58 angedeutet ist.

Die Gesamtdauer einer Erhitzungsphase 53 zusammen mit einer Abkühlungsphase 55 wird nachstehend Überdeckungsdauer 59 genannt. Der Kehrwert der Überdeckungsdauer 59 wird Überdeckungsfrequenz genannt, die angibt, wie schnell sich der zweite Laser 43 entlang der Spiralkurve 49 bewegt. Die Gesamtdauer aller Erhitzungsphasen 53 zusammen mit allen Abkühlungsphasen 55 wird nachstehend Erhitzungsdauer 60 genannt.

Die Erhitzungsdauer 60 ist erreicht, wenn auf der ersten Verbindungsfläche 47 auf allen Punkten der Spiralkurve 49 eine Wärmeenergie 51 mit einer Temperatur erreicht ist, die oberhalb der Rekristallisierungstemperatur des ersten Rohteils 45 liegt. In gleicher Weise wie die Erwärmung oder Erhitzung der ersten Verbindungsfläche 47 erfolgt auch die Erwärmung oder Erhitzung der zweiten Verbindungsfläche 48.

Nachdem die Verbindungsflächen der Rohteile auf die Temperatur oberhalb der Rekristallisierungstemperatur erhitzt sind, werden die Rohteile dann über den Spannstock 14 gegeneinander solange verpresst, bis sich die Rohteile auf eine Temperatur unterhalb der Rekristallisierungstemperatur wieder abgekühlt haben. Hierbei können an der Verbindungsstelle der beiden Rohteile 45, 46 Grate 61 entstehen, die beispielsweise spanabhebend wieder entfernt werden können. Nachdem die beiden Rohteile 45, 46 miteinander mechanisch verbunden sind, können sie aus dem Spannstock 14 entfernt und beispielsweise in der Fertigungsstraße 1 weiter bearbeitet werden.

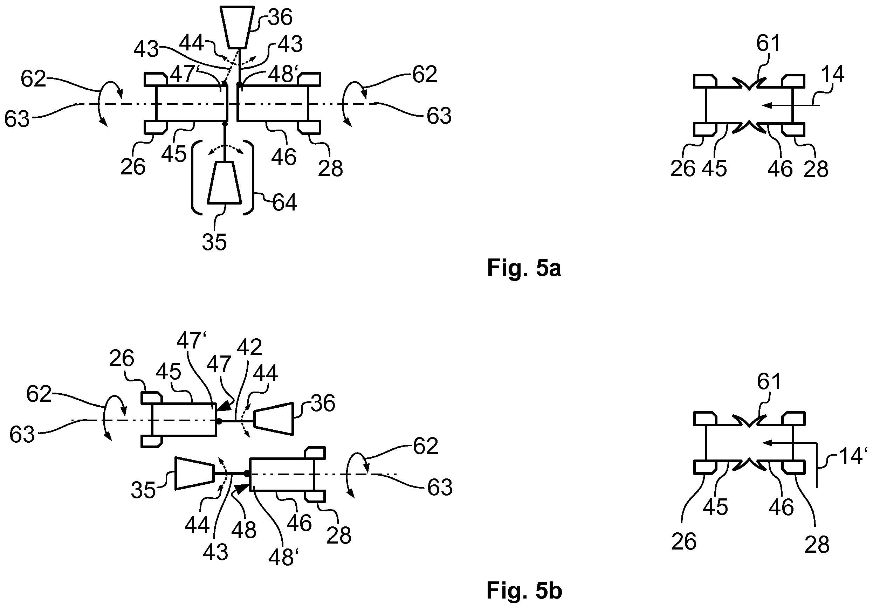

Es wird auf Fig. 5a Bezug genommen, die ein alternatives Beispiel (nicht Teil der Erfindung) des Erhitzungsvorgangs der Verbindungsflächen 47, 48 der Rohteile 45, 46 zeigt. In Fig. 5a sind der Übersichtlichkeit halber nicht alle Elemente mit einem Bezugszeichen versehen. In der alternativen Ausführung der Fig. 5a lässt sich optional auf die Verwendung einer der beiden Scanneroptiken 35, 36 verzichten, was durch eine Klammer 64 um die erste Scanneroptik 35 angedeutet ist. Zunächst soll jedoch der Fall betrachtet werden, dass die erste Scanneroptik 35 das erste Rohteil 45 erhitzt, während die zweite Scanneroptik 36 das zweite Rohteil 46 erhitzt.

In der Fig. 5a bestrahlen der erste Laser 42 und der zweite Laser 43 die Verbindungsflächen 47, 48 nicht direkt sondern indirekt über die Mantelflächen der Rohteile im Bereich des ersten Verbindungsabschnitts 47' beziehungsweise des zweiten Verbindungsabschnittes 48'. Hierfür sind die beiden Laser 42, 43 von der Rotationsachse 63 aus gesehen radial nach innen auf den entsprechenden Teil der Mantelfläche des ersten Rohteils 45 beziehungsweise des zweiten Rohteils 46 ausgerichtet. Anders als in Fig. 4a bestrahlen die Laser 42, 43 die Rohteile 46, 47 daher nicht über Kreuz.

In Fig. 5a werden die Verbindungsflächen 47, 48 somit nicht direkt durch Bestrahlen mit den Lasern 42, 43 erhitzt. Vielmehr wird am ersten Rohteil 45 durch Bestrahlen der Mantelfläche im ersten Verbindungsabschnitt 47' mit dem ersten Laser 42 die erste Verbindungsfläche 47 indirekt auf die Temperatur oberhalb der Rekristallisationstemperatur erhitzt. In gleicher Weise wird indirekt die zweite Verbindungsfläche 48 mit dem zweiten Laser 43 auf die Temperatur oberhalb der Rekristallisationstemperatur erhitzt, und das Verfahren kann, wie in Fig. 5a angedeutet in der gleichen Weise beendet werden, wie in Fig. 4a.

Um wie bereits weiter oben und durch die Klammer 64 angedeutet, auf die erste Scanneroptik 35 verzichten zu können, kann die zweite Scanneroptik 36 eingerichet sein, den zweiten Laser 43 zwischen dem ersten Verbindungsabschnitt 47' und dem zweiten Verbindungsabschnitt 48' hin- und herpendeln zu lassen. Die Idee des Pendelns ist in Fig. 5a durch eine gestrichelte Darstellung des zweiten Lasers 43 ausgerichet auf den ersten Verbindungsabschnitt 47' angedeutet.

In Fig. 5b ist angedeutet, dass die Verbindungsbereiche 47', 48' auch in einer Lage der beiden Rohteile 45, 46 erhitzt werden könnten, in der die Rotationsachsen 63 der beiden Rohteile 45, 46 nicht auf einer Linie liegen. Für den Verpressvorgang müssen die Rohteile 45, 46 daher auf einer gemeinsamen Presslinie ausgerichtet werden, so dass für das Zusammenpressen der beiden Rohteile 45, 46 nach dem Erhitzen kein einfacher Schraubstock 14 zum Einsatz kommen kann. Es muss vielmehr ein Aktor gewählt werden, der in der Lage ist, die beiden Rohteile 45, 46 vor dem zusammenpressen axial aufeinander auszurichten. Der Aktor ist in Fig. 5b durch das Bezugszeichen 14' angedeutet.

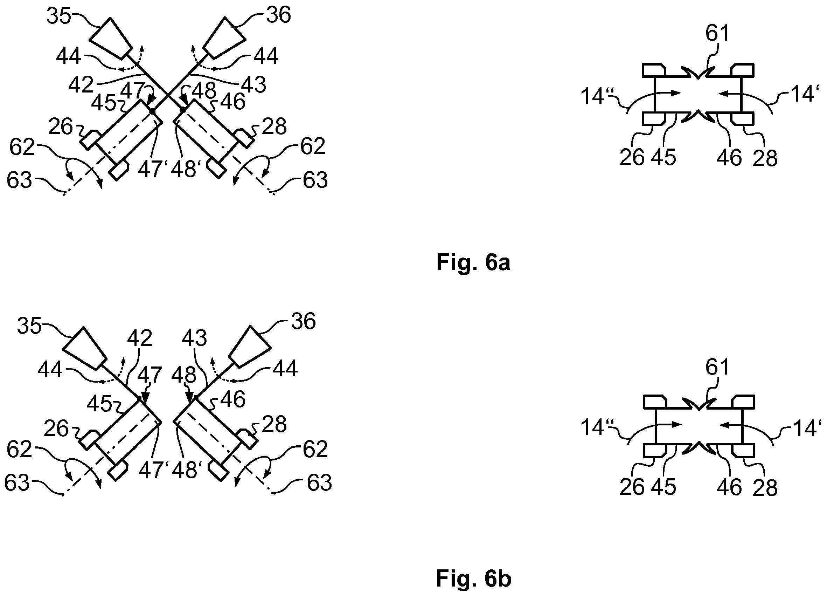

In den Fig. 6a und 6b sind weiter alternative Beispiele (nicht Teil der Erfindung) für die Erhitzung der Verbindungsbereiche 47', 48' der Rohteile 45, 46 gezeigt. Die Rohteile 45, 46 sind hier mit ihren Rotationsachsen 63 winklig zueinander ausgerichtet. Auch in diesen Beispielen müssen die Rohteile 45, 46 für den Verpressvorgang zunächst auf eine gemeinsame Presslinie ausgerichtet werden. Zweckmäßigerweise sollte hierfür neben den bereits im Zusammenhang mit der Fig. 5a genannten Aktor 14' zum Bewegen des zweiten Rohteils 46 noch ein weiterer Aktor 14" zum Bewegen des ersten Rohteils 45 vorgesehen werden.

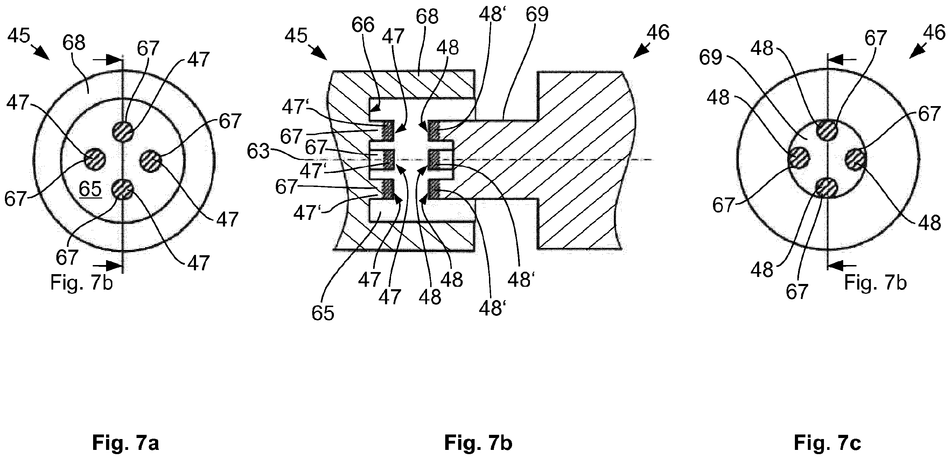

Der Vorteil der Laserpressschweißmaschine 10 soll nachstehend anhand der Fig. 7a bis 7c näher verdeutlicht werden. Dort sind zwei fiktive Rohteil 45, 46 gezeigt, die mit einem der zuvor beschriebenen Presschweißverfahren problemlos miteinander verbunden werden können. Eine Verbindung dieser beiden Rohteile 45, 46 mit herkömmlichen Pressschweißverfahren ist nicht möglich.

Das erste Rohteil 45 besitzt stirnseitig eine Ausnehmung 65 auf dessen Bodenseite 66 vier Vorsprünge 67 angeordnet sind. Auf diesen vier Vorsprüngen 67 sind je eine erste Verbindungsfläche 47 des ersten Rohteils 45 angeordnet. An der radialen Außenseite des ersten Rohteils 45 sind die vier von einer umlaufenden Wand 68 umgeben.

Das zweite Rohteil 46 besitzt stirnseitig einen Vorsprung 69 auf dessen Spitzenseite 66 ebenfalls vier Vorsprünge 67 angeordnet sind. Auf diesen vier Vorsprüngen 67 sind je eine zweite Verbindungsfläche 48 des zweiten Rohteils 46 angeordnet. Die Vorsprünge 67 des ersten Rohteils 45 und des zweiten Rohteils 46 sind so angeordnet, dass sie beim axialen Einführen des Vorsprungs 69 in die Ausnehmung 65 übereinander legbar und somit aneinander anpressbar sind.

Mit einem Presschweißverfahren, das mittels elektromagnetischen Feldern wirkt, könnten die Verbindungsflächen 47 in der Ausnehmung 65 nicht erhitzt werden, weil die Wand 68 die elektromagnetischen Felder abschirmt.

Presschweißverfahren, die mittels Reibwärme operieren können alle Verbindungsflächen 47, 48 strukturbedingt nicht erhitzen.

Mit den Lasern 42, 43 ist eine Erhitzung jedoch problemlos möglich, weil diese nicht nur in die Ausnehmung 65 eindringen können, sie können die einzelnen Verbindungsflächen dediziert erhitzen. Den zuvor beschriebenen Pressschweißverfahren, in denen die Verbindungsflächen 47, 48 mittels Lasern erhitzt werden, sind keinerlei Einschränkungen hinsichtlich Struktur oder Material der Rohteile 45, 46 gesetzt.

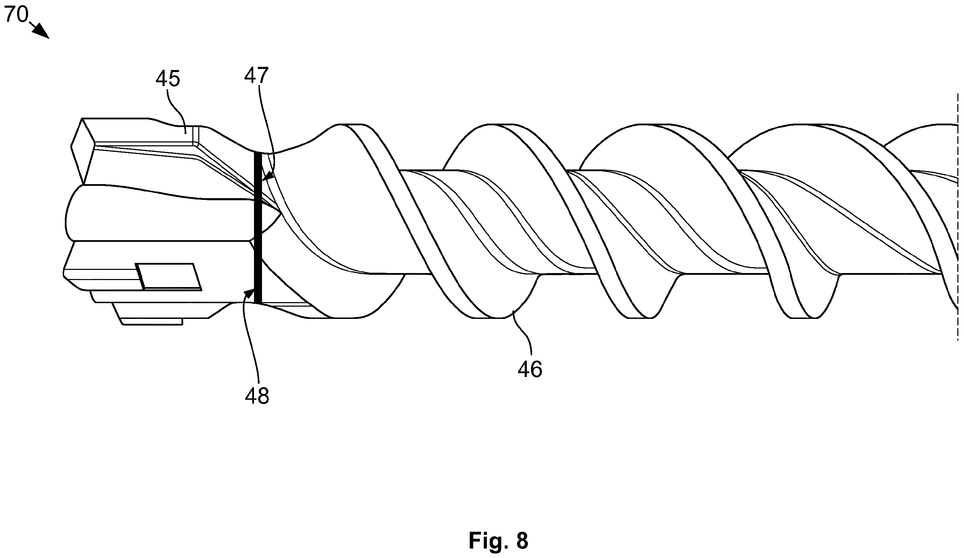

Ein Beispiel für das sich ergebende große Anwendungsgebiet der zuvor beschriebenen Presschweißverfahren, in denen die Verbindungsflächen 47, 48 mittels Laser 42, 43 erhitzt werden, soll nachstehend anhand Fig. 8 erläutert werden, die eine Prinzipdarstellung eines Bohrers 70 zeigt.

Der Bohrer 70 umfasst das erste Rohteil 45 in Form eines Bohrerkopfes und das zweite Rohteil 46 in Form eines Schneidgewindes. Bohrerkopf 45 und Schneidgewinde 46 haben grundsätzlich verschiedene Anforderungsprofile, weshalb es wünschenswert wäre, diese aus verschiedenen Materialien anzufertigen.

Hier kann das zuvor vorgestellte Pressschweißverfahren helfen, in dem die Verbindungsflächen 47, 48 mit Lasern 42, 43 erhitzt werden. Da sich die Laser 42, 43 weder gegenseitig beeinflussen noch die Erhitzung der beiden Verbindungsflächen 47, 48 voneinander abhängig ist, können mit dem Pressschweißverfahren zwei Materialien miteinander verbunden werden, die grundsätzlich völlig verschiedene Rekristallisationstemperaturen aufweisen. Der Bohrkopf 45 kann beispielsweise aus einem gesinterten Hartmaterial ausgeführt sein, während das Schneidgewinde 46 aus einem weichen Stahl ausgeführt werden kann. Dies ist ebenfalls mit herkömmlichen Pressschweißverfahren nicht realisierbar.

## Patentansprüche

1. Verfahren zum Verbinden eines ersten metallischen Rohteils (45) mit einem eine erste Verbindungsfläche (47) aufweisenden ersten Verbindungsabschnitt (47') und eines zweiten metallischen Rohteils (46) mit einem eine zweite Verbindungsfläche (48) aufweisenden zweiten Verbindungsabschnitt (48'), umfassend:
- Erwärmen der ersten Verbindungsfläche (47) auf eine Temperatur zwischen der Rekristallisierungstemperatur und der Schmelztemperatur des ersten Rohteils (45),
- Erwärmen der zweiten Verbindungsfläche (48) auf eine Temperatur zwischen der Rekristallisierungstemperatur und der Schmelztemperatur des zweiten Rohteils (46), und
- Anpressen der ersten Verbindungsfläche (47) des ersten Rohteils (45) an die zweite Verbindungsfläche (48) des zweiten Rohteils (46), bis sich die Rohteile (45, 46) an den Verbindungsflächen (47, 48) auf eine Temperatur unterhalb der Rekristallisationstemperatur abgekühlt haben,
**dadurch gekennzeichnet, dass**
das Erwärmen der ersten Verbindungsfläche (47) durch Laserbestrahlen des ersten Verbindungsabschnitts (47') des ersten Rohteils (45) erfolgt und das Erwärmen der zweiten Verbindungsfläche (48) durch Laserbestrahlen des zweiten Verbindungsabschnitts (48') erfolgt,
wobei der erste Verbindungsabschnitt (47') und der zweite Verbindungsabschnitt (48') gleichzeitig entsprechend mit einem ersten Laser (42) und einem zweiten Laser (43) bestrahlt werden,
wobei der erste Verbindungsabschnitt (47') und der zweite Verbindungsabschnitt (48') beim Bestrahlen entsprechend mit dem ersten Laser (42) und dem zweiten Laser (43) derart angeordnet sind, dass die Flächennormalen der Verbindungsflächen (47, 48) in entgegengesetzte Richtungen zeigen,
und wobei die beiden aufeinander zu gerichteten Verbindungsflächen (47, 48) auf einer Achse (63) liegen, und die Laser (42, 43) die Verbindungsflächen (47, 48) winklig zu deren Flächennormalen bestrahlen.

2. Verfahren nach Anspruch 1, wobei der Laser (42) zum Erwärmen des ersten Verbindungsabschnitts (47') eine Kurve (49) über den ersten Verbindungsabschnitt (47') fährt, der den Verbindungsabschnitt (47') mit einem vorbestimmten Überdeckungsgrad ausfüllt.

3. Verfahren nach Anspruch 2, wobei der Laser (42) die Kurve (49) periodisch mit einer Überdeckungsfrequenz abfährt.

4. Verfahren nach Anspruch 3, wobei die Überdeckungsfrequenz derart gewählt ist, dass an jedem Punkt (50) der Kurve (49) auf des ersten Verbindungsabschnitts (47') eine Energiezufuhr (54) während einer Bestrahlung (53) durch den Laser (42) größer ist, als eine Energieabfuhr (56) während einer Abkühlung (55) bei der der Laser (42) den Rest der Kurve (49) abfährt.

5. Vorrichtung (10) zur Durchführung eines Verfahrens nach einem der vorstehenden Ansprüche, umfassend:
- ein erstes Spannmittel (26) zum Einspannen eines ersten Rohteils (45),
- ein zweites Spannmittel (28) zum Einspannen eines zweiten Rohteils (46), und
- eine Pressvorrichtung (14) zum Verpressen der an Verbindungsflächen (47, 48) erhitzten Rohteile (45, 46) an den Verbindungsftächen (47, 48) **gekennzeichnet, durch**
eine Laserabgabevorrichtung (35, 36) zum Erhitzen einer ersten Verbindungsfläche (47) des ersten Rohteils (45) und einer zweiten Verbindungsfläche (48) des zweiten Rohteils (46) mittels Laser (42, 43),
wobei ein erster Laser (42) und ein zweiter Laser (43) zum gleichzeitigen Bestrahlen eines ersten Verbindungsabschnitts (47') und eines zweiten Verbindungsabschnitts (48') vorhanden ist,
wobei das erste Spannmittel (26), das zweite Spannmittel (28) und die Laserabgabevorrichtung (35, 36) derart konfiguriert sind, dass die Flächennormalen der Verbindungsflächen (47, 48) des ersten Verbindungsabschnitts (47') und des zweiten Verbindungsabschnitts (48') beim Bestrahlen mit dem ersten Laser (42) und dem zweitem Laser (43) in entgegengesetzte Richtungen zeigen, und wobei das erste Spannmittel (26), das zweite Spannmittel (28) und die Laserabgabevorrichtung (35, 36) derart konfiguriert sind, dass die beiden aufeinander zu gerichteten Verbindungsflächen (47, 48) auf einer Achse (63) liegen, und die Laser (42, 43) die Verbindungsflächen (47, 48) winklig zu deren Flächennormalen bestrahlen.

## Claims

1. A method for joining a first metallic blank (45) with a first joining section (47') having a first joining surface (47) and a second metallic blank (46) with a second joining section (48') having a second joining surface (48), the method comprising:
- heating the first joining surface (47) to a temperature between the recrystallisation temperature and the melting temperature of the first blank (45),
- heating the second joining surface (48) to a temperature between the recrystallisation temperature and the melting temperature of the second blank (46), and
- pressing the first joining surface (47) of the first blank (45) against the second joining surface (48) of the second blank (46) until the blanks (45, 46) at the joining surfaces (47, 48) have cooled to a temperature below the recrystallisation temperature,
**characterised in that**
the heating of the first joining surface (47) is made by laser irradiating the first joining section (47') of the first blank (45) and the heating of the second joining surface (48) is made by laser irradiating the second joining section (48'),
wherein the first joining section (47') and the second joining section (48') are irradiated simultaneously with a first laser (42) and a second laser (43), respectively,
wherein the first joining section (47') and the second joining section (48') are arranged in correspondence with the first laser (42) and the second laser (43) during irradiation in such a way that the surface normals of the joining surfaces (47, 48) point in opposite directions,
and wherein the two facing joining surfaces (47, 48) lie on an axis (63), and the lasers (42, 43) irradiate the joining surfaces (47, 48) at an angle to their surface normals.

2. The method according to claim 1, wherein in order to heat the first joining section (47'), the laser (42) moves along a curve (49) on the first joining section (47') which fills the joining section (47') with a predetermined degree of overlap.

3. The method according to claim 2, wherein the laser (42) periodically moves along the curve (49) at a superimposing frequency.

4. The method according to claim 3, wherein the superimposing frequency is selected such that, at each point (50) of the curve (49) on the first joining section (47'), an energy supply (54) during irradiation (53) by the laser (42) is greater than an energy dissipation (56) during cooling (55) at which the laser (42) moves along the remainder of the curve (49).

5. A device (10) for carrying out a method according to any one of the preceding claims, comprising:
- a first clamping means (26) for clamping a first blank (45),
- a second clamping means (28) for clamping a second blank (46), and
- a pressing device (14) for pressing the blanks (45, 46) heated at their joining surfaces (47, 48) against the joining surfaces (47, 48)
**characterised by**
a laser emitting device (35, 36) for heating a first joining surface (47) of the first blank (45) and a second joining surface (48) of the second blank (46) by means of lasers (42, 43),
wherein a first laser (42) and a second laser (43) are provided for simultaneously irradiating a first joining section (47') and a second joining section (48'),
wherein the first clamping means (26), the second clamping means (28) and the laser emitting device (35, 36) are configured such that the surface normals of the joining surfaces (47, 48) of the first joining section (47') and the second joining section (48') point in opposite directions when irradiated with the first laser (42) and the second laser (43),
and wherein the first clamping means (26), the second clamping means (28) and the laser emitting device (35, 36) are configured such that the two facing joining surfaces (47, 48) lie on an axis (63), and the lasers (42, 43) irradiate the joining surfaces (47, 48) at an angle to their surface normals.

## Revendications

1. Procédé de raccordement d'une première ébauche (45) métallique avec une première section de raccordement (47') présentant une première surface de raccordement (47) et d'une seconde ébauche (46) métallique avec une seconde section de raccordement (48') présentant une seconde surface de raccordement (48), comprenant:
- le chauffage de la première surface de raccordement (47) à une température entre la température de recristallisation et la température de fusion de la première ébauche (45),
- le chauffage de la seconde surface de raccordement (48) à une température entre la température de recristallisation et la température de fusion de la seconde ébauche (46), et
- le pressage de la première surface de raccordement (47) de la première ébauche (45) contre la seconde surface de raccordement (48) de la seconde ébauche (46) jusqu'à ce que les ébauches (45, 46) aient refroidi au niveau des surfaces de raccordement (47, 48) à une température inférieure à la température de recristallisation,
**caractérisé en ce que**
le chauffage de la première surface de raccordement (47) est effectué par irradiation laser de la première section de raccordement (47') de la première ébauche (45) et le chauffage de la seconde surface de raccordement (48) est effectué par irradiation laser de la seconde section de raccordement (48'),
dans lequel la première section de raccordement (47') et la seconde section de raccordement (48') sont irradiées simultanément de manière correspondante avec un premier laser (42) et un second laser (43),
dans lequel la première section de raccordement (47') et la seconde section de raccordement (48') sont agencées lors de l'irradiation de manière correspondante avec le premier laser (42) et le second laser (43) de telle manière que les normales de surface des surfaces de raccordement (47, 48) sont dirigées dans des sens opposés,
et dans lequel les deux surfaces de raccordement (47, 48) dirigées l'une vers l'autre se trouvent sur un axe (63), et les lasers (42, 43) irradient les surfaces de raccordement (47, 48) de manière angulaire par rapport à leurs normales de surface.

2. Procédé selon la revendication 1, dans lequel le laser (42) pour le chauffage de la première section de raccordement (47') réalise une courbe (49) au-dessus de la première section de raccordement (47') qui remplit la section de raccordement (47') avec un degré de recouvrement prédéterminé.

3. Procédé selon la revendication 2, dans lequel le laser (42) sort périodiquement de la courbe (49) avec une fréquence de recouvrement.

4. Procédé selon la revendication 3, dans lequel la fréquence de recouvrement est choisie de telle manière qu'à chaque point (50) de la courbe (49) sur la première section de raccordement (47') un apport d'énergie (54) est plus grand pendant une irradiation (53) par le laser (42) qu'une évacuation d'énergie (56) pendant un refroidissement (55) pour lequel le laser (42) sort du reste de la courbe (49).

5. Dispositif (10) pour la réalisation d'un procédé selon l'une quelconque des revendications précédentes, comprenant:
- un premier moyen de serrage (26) pour le serrage d'une première ébauche (45),
- un second moyen de serrage (28) pour le serrage d'une seconde ébauche (46), et
- un dispositif de pressage (14) pour le pressage des ébauches (45, 46) chauffées au niveau des surfaces de raccordement (47, 48) contre les surfaces de raccordement (47, 48)
**caractérisé par**
un dispositif de sortie laser (35, 36) pour le chauffage d'une première surface de raccordement (47) de la première ébauche (45) et d'une seconde surface de raccordement (48) de la seconde ébauche (46) au moyen des lasers (42, 43), dans lequel un premier laser (42) et un second laser (43) sont présents pour l'irradiation simultanée d'une première section de raccordement (47') et d'une seconde section de raccordement (48'),
dans lequel le premier moyen de serrage (26), le second moyen de serrage (28) et le dispositif de sortie laser (35, 36) sont configurés de telle manière que les normales de surface des surfaces de raccordement (47, 48) de la première section de raccordement (47') et de la seconde section de raccordement (48') sont dirigées lors de l'irradiation avec le premier laser (42) et le second laser (43) dans des sens opposés,
et dans lequel le premier moyen de serrage (26), le second moyen de serrage (28) et le dispositif de sortie laser (35, 36) sont configurés de telle manière que les deux surfaces de raccordement (47, 48) dirigées l'une vers l'autre se trouvent sur un axe (63), et les lasers (42, 43) irradient les surfaces de raccordement (47, 48) de manière angulaire par rapport à leurs normales de surface.
